# EUROPÄISCHE PATENTSCHRIFT

(11) **EP 0 902 815 B1**
(45) Veröffentlichungstag und Bekanntmachung des Hinweises auf die Patenterteilung: **07.08.2002**
(21) Anmeldenummer: 97925937.1
(22) Anmeldetag: 23.05.1997
(51) Int. Cl.: C09D 123/02, C09D 5/00, B05D 7/16

(54) **VERFAHREN ZUM TEMPORÄREN SCHUTZ VON OBERFLÄCHEN DURCH POLYMERSCHICHTEN**
METHOD FOR TEMPORARY PROTECTION OF SURFACES BY POLYMER COATINGS
PROCEDE DE PROTECTION TEMPORAIRE DE SURFACES PAR DES COUCHES DE POLYMERE

(30) Priorität: 24.05.1996 DE 19621037
(43) Veröffentlichungstag der Anmeldung: 24.03.1999
(73) Patentinhaber: BASF AKTIENGESELLSCHAFT, 67056 Ludwigshafen (DE)
(72) Erfinder: KINGMA, Arend, Jouke, D-67069 Ludwigshafen (DE); LAPPE, Andreas, D-67150 Niederkirchen (DE); DECKERS, Andreas, D-55234 Flomborn (DE)
(74) Vertreter: Kinzebach, Werner, Dr.
(86) Internationale Anmeldenummer: EP9702642
(87) Internationale Veröffentlichungsnummer: WO9745496

(56) Entgegenhaltungen:
- WO-A-93/01243
- WO-A-97/15499
- DE-A- 2 558 916
- US-A- 4 540 736
- DATABASE WPI Section Ch, Week 7511 Derwent Publications Ltd., London, GB; Class A17, AN 75-18338W XP002039121 & JP 49 126 733 A (SANYO CHEM IND LTD) , 4.Dezember 1974

## Beschreibung

Die vorliegende Erfindung betrifft Polymerdispersionen zum temporären Schutz von Oberflächen durch Polymerschichten auf der Basis von C₂-C₁₀-Olefinen und wenigstens einem radikalisch einpolymerisierbaren Comonomer, farbige Polymerdispersionen dieses Typs und deren Verwendung zum temporären Schutz und zur farblichen Gestaltung von Oberflächen.

Der temporäre Schutz von Oberflächen vor mechanischen Beschädigungen oder Umwelteinflüssen spielt vor allem bei hochwertigen Produkten eine wichtige Rolle. Dies gilt insbesondere für Gegenstände des täglichen Gebrauchs, wie Kraftfahrzeuge, Einrichtungsgegenstände, Elektronikgeräte und dergleichen, auf deren ästhetische Wirkung großer Wert gelegt wird. Damit deren ästhetische Wirkung in die Zeit zwischen Fertigstellung und Auslieferung an den Kunden nicht beeinträchtigt wird, sind besondere Vorkehrungen zu treffen. So haben sich z.B. in der Automobilindustrie, wo oftmals längere Lagerzeiten von Bauteilen zu überbrücken oder die fertigen Fahrzeugen über lange Strecken auszuliefern sind, zwei Schutzmaßnahmen, insbesondere für lackierte Karosserieteile durchgesetzt: Man trägt entweder wachsartige Beschichtungen auf, die mit Lösungsmittel-haltigen Waschlaugen entfernt werden (vgl. z.B. DE-AS 12 27 592); oder es werden Schutzfolien aufgeklebt, die vom geschützten Gegenstand wieder abgezogen werden können, sobald sie ihre Schutzfunktion erfüllt haben. Als Beispiele für solche Folien können die Rapgard®-Folien der Fa. Kansai Paints, Osaka, genannt werden.

Aufgrund der Verwendung von Lösungsmitteln erscheint die erste Methode aus arbeitshygienischer Sicht und aus Gründen des Umweltschutzes heute nicht mehr zeitgemäß. Bei der zweiten Variante erweist sich als nachteilig, daß die Schutzfolien von Hand aufgeklebt werden müssen, was einerseits sehr arbeitsaufwendig ist und was andererseits zum Einschluß von Luftblasen führen kann, wodurch der Schutz insbesondere von korrosionsempfindlichen Flächen, nur noch bedingt gewährleistet ist.

Beschichtungssysteme, die ohne organische Lösungsmittel auskommen, sind z.B. die flüssigen Konservierungsmittel der DE-OS 29 26 197, die eine Mischung aus Säure, Esterwachsen auf der Basis von Montanwachsen, von Natur- oder Kohlenwasserstoffwachsen und einem basischen Verseifungsmittel, z.B. Alkalihydroxide oder Ethanolamin, umfassen. Sie kommen jedoch nicht ohne größere Mengen an Emulgatoren aus, was dazu führt, daß bei längerer Bewitterung diese aus der Schutzschicht herausdiffundieren und dadurch die Festigkeit des Films herabsetzen oder auch den Lack angreifen.

Die DE-A 35 12 564 beschreibt ein Verfahren zur temporären Konservierung von Metall- und Lackoberflächen durch Auftragen einer Polymerisatdispersion auf Ethylen-Acrylsäure-Basis. Die erhaltene Schutzschicht läßt sich mit Heißwasser entfernen, jedoch gelingt die Entfernung nur dann, wenn die Schichtdicke des aufgetragenen trockenen Films nicht mehr als etwa 1,5 bis 20 µm beträgt. In der Praxis gelingt die Entfernung des Films mit Heißwasser zumeist nie vollständig. Zudem ist das Waschwasser durch die gelösten Polymere belastet, was zu unerwünschten Folgekosten bei seiner Aufarbeitung führt. Ein Recycling des gelösten Polymerisats ist aufgrund der anfallenden hohen Abwassermengen wirtschaftlich nicht sinnvoll.

Die JP 61 07 46 78 beschreibt ein Konservierungsverfahren, das das Auftragen einer ersten Schicht aus Carnaubawachs und anschließend einer weiteren Schicht aus einem Acrylnitril/Acrylat-Polymerisat umfaßt. Die erhaltene Schutzschicht kann als weitgehend zusammenhängende Folie wieder abgezogen werden. Als nachteilig erweist sich dabei der zweischichtige Aufbau der Schutzschicht, da sowohl die Auftragung als auch das Recycling der abgezogenen Schutzschicht erschwert wird. Zudem ist das als Basisschicht eingesetzte Carnaubawachs als Naturprodukt sehr teuer.

Es stellt sich somit die Aufgabe, ein Verfahren zum temporären Schutz von Oberflächen bereitzustellen, das die Nachteile der aus dem Stand der Technik bekannten Schutzmaßnahmen vermeidet.

Es wurde nun überraschenderweise festgestellt, daß diese Aufgabe durch Verwendung von Polymerdispersionen der eingangs bezeichneten Art und deren Auftragung in einer bestimmten Mindestschichtdicke gelöst werden kann.

Die vorliegende Erfindung betrifft daher ein Verfahren zum temporären Schutz von Oberflächen, durch Auftragen der erfindungsgemäßen wäßrigen Dispersion eines Polymers aus
a) wenigstens ein C₂-C₁₀-Olefin,
b) wenigstens einem mit dem Olefin unter radikalischen Bedingungen copolymerisierbaren Comonomer,
und anschließendes Trocknen der aufgetragenen Dispersionsschicht, wobei eine feste Polymerschicht auf der zu schützenden Oberfläche ausgebildet wird und die Polymerschicht im Mittel eine Trockenschichtdicke von mehr als 20 µm, vorzugsweise von etwa 25 bis 1000 µm, wie z.B. etwa 35 bis 300 µm, aufweist.

Die erfindungsgemäßen Polymerdispersionen bieten den überraschenden Vorteil, daß die Schutzschicht in einem einzigen Arbeitsschritt auftragbar ist, die darunterliegende Oberfläche gleichmäßig und ohne Blasenbildung abdeckt und im Stück wieder abgezogen werden kann.

Unter der "mittleren Trockenschichtdicke" versteht man im Rahmen der vorliegenden Erfindung die mittlere Dicke des Polymerfilms auf der beschichteten Fläche nach Verdunsten oder Verdampfen der Dispersionsphase und gegebenenfalls weiterer flüchtiger Bestandteile der Dispersion.

Insbesondere verwendet man ein dispergiertes Polymer, das, bezogen auf das Gesamtgewicht des Polymers,
etwa 35 bis etwa 92 Gew.-% Monomer a)
   und
etwa 8 bis etwa 65 Gew.-% Monomer b)
enthält.

Im folgenden bezeichnet C₁-Cₙ die jeweils mögliche Anzahl von Kohlenstoffatomen einer Verbindung oder eines Restes. Unter C₁-Cₙ-Alkyl versteht man lineare oder verzweigte Alkylgruppen mit 1 bis n Kohlenstoffatomen. Beispielsweise können genannt werden C₁-C₁₀-Alkylgruppen, wie Methyl, Ethyl, n-Propyl, i-Propyl, n-Butyl, 2-Butyl, i-Butyl, t-Butyl, n-Pentyl, 2-Pentyl, Neopentyl, n-Hexyl, 2-Ethylhexyl, n-Octyl oder n-Decyl. Beispiele für längerkettige Alkylgruppen sind C₁₁-C₁₈-Alkylreste, wie Undecyl, Lauryl, Tridecyl, Myristyl, Pentadecyl, Palmityl, Heptadecyl und Stearyl. Unter C₅-C₁₀-Cyloalkyl versteht man Cyclopropyl, Cyclobutyl, Cyclopentyl, Cycloheptyl oder Cyclooctyl, das gegebenenfalls durch 1, 2 oder 3 C₁-C₄-Alkylgruppen, vorzugsweise Methyl oder Ethyl substituiert ist. Unter Aryl versteht man vorzugsweise Phenyl oder Naphthyl, das gegebenenfalls durch 1, 2, 3 oder 4 C₁-C₄-Alkylgruppen, C₁-C₄-Alkoxygruppen oder Halogenatome substituiert ist. Aralkylgruppen sind über Alkylengruppen gebundene Arylgruppen, wie z.B. Benzyl oder Phenylethylen.

Bevorzugte Monomere a) sind C₂-C₆-Olefine, insbesondere Ethylen, Propen, 1-Buten, 2-Buten oder Isobuten oder deren Mischungen, wobei Mischungen, die Ethylen als Hauptkomponente enthalten, bevorzugt sind. Besonders bevorzugt wird Ethylen als alleiniges Monomer a) verwendet.

Bevorzugte Monomere b) sind:
monoethylenisch ungesättigte Mono- oder Dicarbonsäuren mit 3 bis 10 Kohlenstoffatomen und deren Anhydride ;
Amide solcher monoethylenisch ungesättigter Mono- oder Dicarbonsäuren, wie z.B. Acrylamid und Methacrylamid;
N-Mono- und N,N-Di-C₁-C₆-alkylamide solcher monoethylenisch ungesättigter Mono- oder Dicarbonsäuren, wie z.B. N-Mono- und N,N-Di-C₁-C₆-alkylamide der Methacrylsäure und der Acrylsäure;
monoethylenisch ungesättigte C₃-C₁₀-Alkohole, wie z.B. Allylalkohol;
monoethylenisch ungesättigte Ether, wie z.B. von den genannten monoethylenisch ungesättigten C₃-C₁₀-Alkoholen, verethert mit C₁-C₆-Alkylgruppen;
N-Vinylheterocyclen, wie z.B. N-Vinylpyrrolidon und N-Vinylimidazol;
Vinylester von C₂-C₁₈-Monocarbonsäuren, wie z.B. Vinylacetat und Vinylpropionat;
C₁-C₁₈-Monoalkylester monoethylenisch ungesättigter C₂-C₁₀-Monocarbonsäuren; und
C₁-C₁₈-Mono- und -Dialkylester monoethylenisch ungesättigter C₄-C₁₀-Dicarbonsäuren.

Besonders bevorzugt sind Monomere b₁) und zwar α,β-ungesättigte C₃-C₆-Carbonsäuren oder C₄-C₈-Dicarbonsäuren, insbesondere Acrylsäure, Methacrylsäure, Crotonsäure, Isocrotonsäure, Maleinsäure, Maleinsäureanhydrid, Fumarsäure, Itaconsäure, Itaconsäureanhydrid oder Gemische dieser Monomeren. Insbesondere bevorzugt werden Acrylsäure, Methacrylsäure, Mischungen dieser beiden Monomere oder Mischungen, die eines oder beide dieser Monomere zu mehr als 90% enthalten, verwendet.

Als Monomere b₂) kommen bevorzugt die C₁-C₁₀-Alkylester, C₅-C₁₀-Cyclpalkylester, C₆-C₂₀-Aryl- und/oder Aralkylester der α,β-ungesättigten C₃-C₆-Carbonsäuren oder C₄-C₈-Dicarbonsäuren, insbesondere der Acrylsäure oder der Methacrylsäure, in Frage. Besonders bevorzugte Monomere b₂) sind Methyl-, Ethyl-, n-Propyl-, i-Propyl-, n-Butyl-, 2-Butyl-, iso-Butyl-, t-Butyl-, n-Hexyl- und 2-Ethylhexyl(meth)acrylat, aber auch die entsprechenden Mono- und Diester von Malein- und Fumarsäure, oder deren Mischungen.

Besonders bevorzugte Monomerkombinationen sind Ethylen/Acrylsäure; Ethylen/Methacrylsäure; Ethylen/Acrylsäure/n-Butylacrylat und Ethylen/Acrylsäure/2-Ethylhexylacrylat. Die relativen Anteile der Monomere werden dabei bevorzugt so gewählt, daß die Glastemperatur des Polymers unterhalb Raumtemperatur, insbesondere unterhalb 0°C und besonders bevorzugt unterhalb -20°C liegt.

Die erfindungsgemäß zur Anwendung kommenden Polymerisatdispersionen enthalten Polymere, die vorzugsweise aus 35 bis 92 Gew.-%, insbesondere 45 bis 87,8 Gew.-% Monomeren a), 8 bis 25 Gew.-%, insbesondere 12 bis 25 Gew.-% Monomeren b₁) und 0 bis 40 Gew.-%, insbesondere 0,2 bis 30 Gew.-% Monomeren b₂) aufgebaut sind. Dabei umfasst vorzugsweise Monomer a) Ethylen, Monomer b₁) Acrylsäure und/oder Methacrylsäure und Monomer b₂) C₁-C₁₀-Alkylacrylat und/oder -methacrylat.

Die erfindungsgemäß zur Anwendung kommenden Polymerisate sowie ihre Herstellung sind dem Fachmann im Prinzip bekannt. Sie lassen sich durch alle gängigen Polymerisationsverfahren, z.B. durch Emulsionspolymerisation (siehe Houben-Weyl, Methoden der anorganischen Chemie, Band E20/I, Makromolekulare Stoffe, Georg-Thieme-Verlag, Stuttgart, 1987), oder vorzugsweise durch kontinuierliche Hochdruckpolymerisation herstellen. Letztere Vorgehensweise empfiehlt sich insbesondere bei den leicht flüchtigen Olefinen Ethylen und Propylen. Zudem werden auf diesem Wege emulgatorfreie Polymerisatdispersionen erhalten.

Auch die kontinuierliche Hochdruckpolymerisation ist dem Fachmann im Prinzip bekannt und kann beispielsweise in der in DE-A 34 20 168 und der DE-A 35 12 564 beschriebenen Weise erfolgen. Die Polymerisation findet in der Regel bei Temperaturen im Bereich von 150 bis 300°C und einem Druck von 1000 bis 3000 bar in Gegenwart wenigstens eines Radikalstarters, beispielsweise einer Peroxoverbindung wie t-Butylperoxopivalat oder einer Azoverbindung wie Azobisisobutyronitril, statt. Darüber hinaus können bis zu 5 Gew.-%, bezogen auf die Monomeren, an Reglern anwesend sein. Geeignete Regler sind beispielsweise aliphatische Aldehyde mit 3 bis 6 C-Atomen, insbesondere Propionaldehyd oder n-Butyraldehyd, aliphatische Ketone mit 3 bis 6 C-Atomen, z.B. Aceton oder Methylethylketon. Hierbei gilt zu beachten, daß die α-Olefine mit mehr als 3 C-Atomen ebenfalls als Regler in die Polymerisation mit eingreifen können. Die Polymerisationsbedingungen werden so eingestellt, daß die Polymerisate eine Schmelzviskosität bei 120°C von wenigstens von 1000 mm²/sec als untere Grenze und einen MFI-Wert von wenigstens 1, gemessen bei 160°C und 325 g Belastung, als obere Grenze aufweisen.

Die Polymerisate kommen erfindungsgemäß als Dispersion mit einem Feststoffgehalt von vorzugsweise 5 bis 40 Gew.-% und insbesondere 10 bis 35 Gew.-% zur Anwendung, wobei vorzugsweise wenigstens 40% der im Polymer vorhandenen Säuregruppen in neutralisierter Form vorliegen. Geeignete Basen für die Neutralisation sind beispielsweise Natrium- oder Kaliumhydroxid, Ammoniak, vorzugsweise jedoch Alkylamine, -diamine oder -triamine, insbesondere solche, deren Alkylreste mit Hydroxylgruppen - in freier, ethoxylierter oder veresterter Form - substituiert sind. Als Amine kommen insbesondere in Betracht: Mono-, Di- oder Trialkanolamine mit bevorzugt 2 bis 6 C-Atomen im Hydroxyalkylrest, Monoalkyldialkanolamine und Dialkylmonoalkanolamine mit jeweils 2 bis 8 C-Atomen im Alkylund Hydroxyalkylrest. Hierbei können die Alkyl- oder Hydroxyalkylketten auch Etherfunktionen enthalten. Selbstverständlich können auch Mischungen der genannten Basen verwendet werden. Besonders bevorzugte Amine sind beispielsweise Diethanolamin, Triethanolamin, 2-Amino-2-methylpropanol, Dimethylethanolamin und Diethylethanolamin, Dimethylaminodiglykol, Diethylaminodiglykol sowie Ethylendiamin oder Diethylentriamin.

Vorzugsweise enthalten die zur Anwendung kommenden Dispersionen keinen Emulgator, da die Polymerisate in der Regel selbstemulgierend sind. Die Herstellung der Emulsionen erfolgt durch Emulsion nach einem üblichen Verfahren (vgl. DE-A 35 12 564).

Hierzu werden die Polymerisate beispielsweise in einem Emulgierautoklaven bei Temperaturen oberhalb des Schmelzpunkt des Polymerisats, vorzugsweise im Bereich von 90 bis 180°C, insbesondere 90 bis 150°C und einem Druck zwischen Normaldruck und 4 bar, mit der notwendigen Menge Wasser und der entsprechenden Menge einer Base, vorzugsweise einem Amin, Diamin oder Triamin, und gegebenenfalls weiteren Hilfsmitteln unter Rühren dispergiert. Anschließend wird unter fortgesetztem Rühren auf Raumtemperatur abgekühlt. Nach EP-A 359 045 kann die Dispergierung auch in einem üblichen Extruder, vorzugsweise einem Zweiwellenmischer, durch Vermischen der Komponenten (Polymerisat, Wasser, Base und Hilfsstoffe) bei Temperaturen im Bereich von 70 bis 200°C und einem Druck von 1 bis 40 bar erfolgen.

Als Hilfsmittel, die vorzugsweise in Mengen von 0,5 bis 2 Gew.-%, bezogen auf die Gesamtmischung, zugesetzt werden, kommen insbesondere in Betracht:
Entschäumer, wie Ethylenoxid/Propylenoxid-Blockcopolymere mit 5 bis 50 EO/PO-Einheiten von Fettalkoholen mit 8 bis 20 C-Atomen, von Diolen oder Triolen wie Ethylenglykol und Ethylendiaminen, Verlaufsmittel, wie das Kaliumsalz des N-Ethyl-n-perfluoroctansulfonylglycins und Fluorad® FC 129 der Firma 3 M, oder auch Korrosionsschutzmittel, wie N-(2-Ethylhexyl)bernsteinsäurehalbamid. N-(2-Ethylhexyl)phthalsäurehalbamid, Phenylsufonylamidocapronsäure, Diisobutenylbern-steinsäure oder Medialansäure.

Die verwendete Polymerdispersion kann weiterhin Polyethylenoxidatwachse, zusammen mit nichtionischen Emulgatoren, oder synthetische oder natürliche Kohlenwasserstoffwachse enthalten. Geeignete Polyethylenoxidatwachse sind bekannt und im Handel erhältlich. Sie sind durch eine Säurezahl von 18 bis 25 und ein Molekulargewicht von 2000 (Gewichtsmittel) bis 10000 charakterisiert. Die gegebenenfalls verwendeten synthetischen oder natürlichen Kohlenwasserstoffwachse sind vorzugsweise die bekannten Polyethylenwachse mit Molgewichten von 500 bis 6000 und Schmelzpunkten im Bereich von 40 bis 110°C, sowie natürliches Paraffin mit einem Schmelzpunkt von 40 bis 100°C. Die genannten Wachse können entweder in Form einer wäßrigen Dispersion, die ebenfalls im Handel erhältlich ist, eingesetzt werden oder aber zusammen mit den Polymerisaten eindispergiert werden.

Werden farbige Dispersionen gewünscht, kann man den Polymerisaten Farbmittel, wie Pigmente oder Farbstoffe, vorzugsweise Pigmente, zufügen. Ihre Herstellung erfolgt in der Regel durch Vermischen der Pigmente mit den Polymerisaten nach den in der Kunststoffverarbeitung üblichen Verarbeitungsweisen. Beispielsweise stellt man farbige Dispersionen durch gemeinsames Extrudieren und anschließendes Dispergieren der eingefärbten Polymerisate in der wäßrigen Phasen nach einer der oben beschriebenen Vorgehensweisen her.

Gegenstand der Erfindung sind somit auch gefärbte wässrige Polymerdispersionen, die, gelöst oder dispergiert in der Polymerphase, als weitere Komponente c) wenigstens ein Pigment, wenigstens einen Farbstoff, gegebenenfalls zusammen mit wenigstens einem UV-Stabilisator, enthalten.

Die erfindungsgemäßen gefärbten Dispersionen besitzen den überraschenden Vorteil, daß die Pigmente bzw. Farbstoffe in der Polymerphase gleichmäßig dispergiert bzw. gelöst vorliegen und nicht in der wäßrigen Phase ausfallen oder sich darin lösen. Da die farbgebenden Bestandteile auch beim Auftragen und Trocknen der Polymerdispersionen im Polymer verbleiben, eignen sich die gefärbten Polymerdispersionen nicht nur zum temporären Schutz sondern auch zum reversiblen Färben von Oberflächen und ermöglichen damit deren temporäre dekorative Gestaltung.

Auf die gleiche Weise können den oben beschriebenen Polymerisaten auch UV-Stabilisatoren zugesetzt werden (in Mengen von etwa 0,1 ) bis 1 Gew.-%, bezogen auf das Gesamtgewicht des Polymers), die eine durch UV-Strahlung hervorgerufene Schädigung oder Zerstörung sowohl der zu schützenden Oberfläche als auch der Schutzschicht verhindern. Der UV-Stabilisator kann dabei in Kombination mit oder anstelle von Pigmenten und/oder Farbstoffen zugesetzt werden.

Gemäß einer weiteren bevorzugten Ausführungsform der Erfindung werden somit farbige Polymerdispersionen bereitgestellt, die in einer wässrigen Dispersionsphase ein dispergiertes Polymers aus
a) wenigstens einem C₂-C₁₀-Olefin gemäß obiger Definition, und
b) wenigstens einem mit dem Olefin unter radikalischen Bedingungen copolymerisierbaren Comonomer gemäß obiger Definition, vorzugsweise ausgewählt unter
   b₁) wenigstens einer α,β-ungesättigten Mono- und/oder Dicarbonsäure oder einem Anhydrid davon gemäß obiger Definition,
   b₂) gegebenenfalls wenigstens einem, mindestens eine Esterfunktion aufweisenden Monomer gemäß obiger Definition, enthalten und außerdem
c) dispergiert oder gelöst in der Polymerphase, wenigstens ein Pigment und/oder Farbstoff, gegebenenfalls in Kombination mit einem UV-Stabilisator, umfassen.

Vorzugsweise werden erfindungsgemäße farbige Polymerdispersionen bereigestellt, worin das dispergierte Polymer
etwa 35 bis etwa 91,95 Gew.-% Monomer a),
etwa 8 bis etwa 64,95 Gew.-% Monomer b), insbesondere
etwa 8 bis etwa 25 Gew.-% Monomer b₁),
0 bis etwa 40 Gew.-% Monomer b₂), und
etwa 0,05 bis etwa 10 Gew.-% Farbmittel und gegebenenfalls UV-Stabilisator enthält.

Insbesondere sind solche farbigen Dispersionen bevorzugt, worin das Polymer als Monomer a) Ethylen, als Monomer b₁) Acrylsäure und/oder Methacrylsäure und als Monomer b₂) C₁-C₁₀-Alkylacrylat und/oder -methacrylat enthält.

Auch bei den farbigen Dispersionen beträgt der Polymergehalt vorzugsweise etwa 5 bis 40 Gew.-%, bezogen auf das Gesamtgewicht der Dispersion. Besonders bevorzugt sind farbige Dispersionen, worin wenigstens etwa 40 mol% der im Polymer vorliegenden Carboxylgruppe, vorzugsweise mit einem niedermolekularen Amin gemäß obiger Definition, neutralisiert sind.

Gegenstand der Erfindung ist schließlich auch die Verwendung der obenbeschriebenen gefärbten Polymerdispersionen zur farblichen Gestaltung von Oberflächen, wobei Gesamtflächen oder, z.B. mit Hilfe von Schablonen, Teilflächen mit wenigstens einem gefärbten Polymer beschichtet werden können. Die gefärbten Polymerdispersionen sind aber ebenso wie die entsprechenden ungefärbten Dispersionen für den temporären Schutz von Oberflächen einsetzbar.

Für die Einfärbung der Polymerschicht sind sowohl anorganische Farbmittel (Pigmente, Farbstoffe) sowie organische Farbmittel geeignet (siehe Ullmann's Enzyklopädie der technischen Chemie, 5. Aufl. Band A3, S. 144-149, A20, S. 243-413 sowie H. Sechtling, Kunststoff-Taschenbuch, 21. Aufl., S. 40). Es sind grundsätzlich alle bekannten anorganischen oder organischen Farbmittel verwendbar, es sei denn, die Stabilität oder eine sonstige wesentliche Eigenschaft der erfindungsgemäßen Polymerdispersion und/oder der damit erzeugten Beschichtung werden durch das Farbmittel nachteilig beeinflußt. Beispiele für geeignete anorganische Pigmente sind TiO₂ und Ruße.

Beispiele für geeignete organische Pigmente sind:
Azopigmente, Metallkomplex-Pigmente, wie Azo- und Azomethin-Metallkomplexe, Isoindolinon- und Isoindolin-Pigmente, Phthalocyanin-Pigmente, Chinakridon-Pigmente, Perinon- und Perylen-Pigmente, Anthrachinon-Pigmente, Diketopyrrolopyrrol-Pigmente, Thioindigo-Pigmente, Dioxazine-Pigmente, Triphenylmethan-Pigmente, Chinophthalon-Pigmente und fluoreszierende Pigmente.

Wichtig bei der Wahl des Farbmittels ist, daß es gut in das Polymer eingearbeitet werden kann, die mechanischen Eigenschaften des Polymerfilms nicht nachteilig verändert, solange er auf der zu schützenden der zu dekorierenden Oberfläche aufgetragen ist, in der Polymerphase zurückgehalten wird und insbesondere in der Dispersionsphase (wässrige Phase) im wesentlichen unlöslich ist.

Geeignete UV-Stabilisatoren sind alle für Kunststoffe verwendbaren anorganischen oder organischen UV-Stabilisatoren, wie beispielsweise substituierte Benzophenone, Salicylsäureester, Hydroxyphenylbenztriazole und die unter der Bezeichnung Hindered Amine Light Stabilisators (HALS) bekannten Verbindungen.

Für eine leichte Entfernbarkeit der Schutzschicht empfiehlt es sich, die gefärbte oder ungefärbte Polymerdispersion möglichst gleichmäßig auf der zu schützenden Oberfläche aufzutragen. Aufgrund der günstigen rheologischen Eigenschaften der Dispersionen ist es möglich, hierzu eines der üblichen Verfahren einzusetzen. Die Aufbringung erfolgt beispielsweise durch Airless-Spritzen mit Hilfe einer Druckpistole, oder in Form der elektrostatischen Lakkierung. Auch ist eine Aufbringung mit Pinsel oder Rolle möglich. Die anschließende Trocknung erfolgt in der Regel durch Infrarotlicht oder im Luftstrom, gegebenenfalls im Heißluftstrom. Das Auftragen kann durch einen einmaligen Vorgang oder aber wiederholt mit zwischenzeitlichen Trocknungsphasen erfolgen. Die Menge an Dispersion pro Flächeneinheit wird so gewählt, daß man nach dem Trocknen eine Schichtdicke von wenigstens 20 µm, vorzugsweise wenigstens 25 µm, besonders bevorzugt wenigstens 35 µm und insbesondere wenigstens 60 µm und bis zu 1000 µm, vorzugsweise bis zu etwa 300 µm erhält.

Man erhält auf diese Weise eine widerstandsfähige Schutzschicht, die die zu schützende Oberfläche vor mechanischen Beschädigungen und Umwelteinflüssen zu schützen vermag. Darüber hinaus lassen sich die erfindungsgemäßen Schutzbeschichtungen auch nach Monaten der Bewitterung (1/2 Jahr Mitteleuropa simuliert nach DIN 53387, April 1989, Verfahren 1-B-X) mühelos und rückstandsfrei wieder entfernen. Der besondere Vorteil des erfindungsgemäßen Verfahrens besteht darin, daß sich die Schutzschicht einerseits sehr leicht, mit einem hohen Automatisierungspotential, aufbringen läßt und ebenso leicht auf rein mechanische Weise wieder entfernen läßt, ohne daß Waschlaugen anfallen. Zudem lassen sich derartige Filme, da sie in Reinform anfallen, sehr leicht recyclen, beispielsweise durch Redispergieren.

Die vorliegende Erfindung eröffnet die Möglichkeit, eine Vielzahl von Oberflächen, beispielsweise Glas, Keramik, Kunststoffe, vorzugsweise lackierte Metalloberflächen, und mit gewissen Einschränkungen auch Holz reversibel zu schützen. Als Beispiele seien genannt der Schutz von lackierten Metallteilen vor Kratzern oder anderen Beschädigungen in Fertigungsabläufen sowie der Lagerungs- und Transportschutz. Die farbigen Dispersionen eignen sich für dekorative Zwecke, insbesondere in Kombination mit ihrer schützenden Wirkung.

Die Erfindung wird nun anhand der folgenden Beispiele weiter erläutert.

### Beispiele

### Einsatzstoffe

Die Herstellung der verwendeten Polymerisate erfolgte in Anlehnung an Beispiel 1 der DE-A 3 512 564 durch Hochdruckpolymerisation der Monomere.
Heliogen® Blau K 6902 ist ein Phthalocyaninpigment der Fa. BASF Paliotol® Gelb K 1841 D ist ein Gelbpigment der Fa. BASF Paliogen® Rot K 3911 HD ist ein rotes Metallkomplexpigment der Fa. BASF
Titandioxid Cl 2220 wurde von der Fa. Kronos AG bezogen Printex® 60 ist ein Ruß-Pigment der Fa. Degussa AG.

### Analytik

Die Schmelzviskosität wird gemäß der DGF-Einheitsmethode C-IV 7 (68) im Kapillarviskosimeter bestimmt, wobei eine Schmelze von 120°C durch eine Kapillare läuft und die Zeit des Durchlaufes gemessen wird.

Der MFI-Wert (Melt Flow Index) gibt die Menge Polymerisatschmelze in Gramm an, die bei gegebener Temperatur und gegebener Belastung durch eine genormte Düse durchgepreßt werden. Die Bestimmung erfolgt gemäß DIN 53735. Der jeweils angegebene Index gibt die Meßtemperatur (°C) und die Belastung (g) an.

### Beispiele 1 bis 3: Herstellung der Polymer-Dispersionen

270 Teile Polymerisat werden in einem Rührkessel mit Dimethylethanolamin und Wasser bei 115°C gerührt, bis nach etwa 1 h eine gleichmäßige Emulsion entstanden ist. Man läßt unter Rühren abkühlen und filtriert. Die jeweiligen Parameter sind Tabelle 1 zu entnehmen.

**Tabelle 1**

| Bsp. | Monomer | | | MFI_{160/325} [g/10 min.] | Wasser [Gew.Tl]⁺ | Amin [Gew.Tl]⁺ | pH | TW [Gew.%] |
|---|---|---|---|---|---|---|---|---|
| | E | AS | EHA | | | | | |
| 1 | 79 | 21 | - | 10 | 684 | 46 | 9,5 | 26,3 |
| 2 | 68 | 16 | 16 | 8 | 670 | 60 | 9,1 | 26,9 |
| 3 | 60 | 20 | 20 | 11 | 684 | 46 | 8,4 | 27,2 |

| | | | | | | | | |
|---|---|---|---|---|---|---|---|---|
| E Ethylen AS Acrylsäure EHA 2-Ethylhexylacrylat TW Trockenwert ⁺ bezogen auf 270 Teile Polymer Farbige Polymerdispersionen | | | | | | | | |

### Beispiel 4: Herstellung eines blauen Polymerisats

In einem Doppelschneckenextruder wurde das Ethylen/Acrylsäure-Copolymer aus Beispiel 1 bei 100°C extrudiert. Über einen Seitenansatz wurde ein blaues Phthalocyaninpigment (Heliogen® Blau K 6902) so zugegeben, daß das Polymer im Austrag 2 Gew.-% Pigment enthielt.

### Beispiel 5: Herstellung eines gelben Polymerisats

Analog Beispiel 4 wurde dem Polymer 2 Gew.-% eines Gelbpigments (Paliotol® Gelb K 1841 D) zugesetzt.

### Beispiel 6: Herstellung eines roten Polymerisats

Analog Beispiel 4 wurde dem Polymer 2 Gew.-% eines Rotpigments (Paliogen® Rot K 3911 HD) zugesetzt.

### Beispiel 7: Herstellung eines weißen Polymerisats

Analog Beispiel 4 wurde dem Polymer 2 Gew.-% Titandioxid (Titandioxid C12220) zugesetzt.

### Beispiel 8: Herstellung eines schwarzen Polymerisats

Analog Beispiel 4 wurde dem Polymer 5 Gew.-% Ruß (Printex® 60) zugesetzt.

### Beispiele 9 bis 24: Herstellung der farbigen Emulsionen

Analog Beispiel 1 wurden 140 Teile der in Anlehnung an die Beispiele 4 bis 8 erhältlichen pigmentiergefärbten Copolymere, Aminbase und Wasser (ad 680 Teile) emulgiert. Weitere Parameter sowie die Charakterisierung der Polymerdispersionen sind der Tabelle 2 zu entnehmen. Der Trockenwert lag für alle Ansätze bei etwa 21 bis 22 Gew.-%.

**Tabelle 2**

| Bsp. | Monomer | | | Pigment | Amin [Gew.Tl] | | pH |
|---|---|---|---|---|---|---|---|
| | E | AS | EHA | | | | |
| 9 | 79 | 21 | - | blau | Dimethylethanolamin | 24 | 8,8 |
| 10 | 79 | 21 | - | TiO₂ | Ethylendiamin | 14,8 | 10,3 |
| 11 | 79 | 21 | - | gelb | Dimethylethanolamin | 23,7 | 8,8 |
| 12 | 79 | 21 | - | rot | Dimethylethanolamin | 23,7 | 9,0 |
| 13 | 79 | 21 | - | TiO₂ | Dimethylethanolamin | 23,7 | 8,9 |
| 14 | 79 | 21 | - | Ruß | Dimethylethanolamin | 23,7 | 8,8 |
| 15 | 79 | 21 | - | TiO₂ | Dimethylaminodiglykol | 54,6 | 9,2 |
| 16 | 79 | 21 | - | TiO₂ | 2-Amino-2-methylpropanol-1 | 23,7 | 8,6 |
| 17 | 79 | 21 | - | TiO₂ | Diethanolamin | 30,2 | 8,3 |
| 18 | 79 | 21 | - | TiO₂ | Triethanolamin | 58,1 | 9,5 |
| 19 | 84,6 | 15,4 | - | TiO₂ | Dimethylaminodiglykol | 39,8 | 9,6 |
| 20 | 86,7 | 13,3 | - | TiO₂ | Dimethylethanolamin | 23,0 | 9,8 |
| 21 | 86,7 | 13,3 | - | TiO₂ | Dimethylaminodiglykol | 34,4 | 9,8 |
| 22 | 88,3 | 11,7 | - | TiO₂ | Dimethylaminodiglykol | 30,3 | 9,8 |
| 23 | 68 | 16 | 16 | TiO₂ | Dimethylethanolamin | 22,5 | 9,2 |
| 24 | 60 | 20 | 20 | TiO₂ | Dimethylethanolamin | 27,7 | 8,8 |

### Aufbringen der Schutzschicht

100 Teile der erhaltenen Emulsionen wurden mit 0,02 Teilen Fluortensid Fluorad® FC 129 als Verlaufsmittel versetzt und mittels einer Sprühvorrichtung mehrmals auf frisch lackierte Prüfbleche gesprüht. Durch ein nur wenige Minute dauerndes Bestrahlen mit einer Infrarotlampe wurde getrocknet. Man erhielt eine einwandfreie, geschlossene, je nach Farbstoff unterschiedlich gefärbte Schicht (Dicke = 35 µm). Anschließend wurden die Folien einem Bewitterungstest ausgesetzt (=̂ 1/2 Jahr Mitteleuropa DIN 53387, April 1989, Verfahren 1-B-X). Die Polymerschicht ließen sich sowohl vor, als auch nach dem Bewitterungstest ohne Probleme von der Oberfläche abziehen.

## Patentansprüche

1. Polymerdispersion, die in einer wässrigen Dispersionsphase ein dispergiertes Polymer aus
a) wenigstens einem C₂-C₁₀-Olefin, und
b) wenigstens einem mit dem Olefin unter radikalischen Bedingungen copolymerisierbaren Comonomer,
enthält und
c) wenigstens einen UV-Stabilisator und/oder wenigstens ein Farbmittel umfasst, das in der Polymerphase dispergiert oder gelöst vorliegt,
wobei das Polymer durch eine Schmelzviskosität von wenigstens 1000 mm²/sec (bei 120°C) als untere Grenze und einen MFI-Wert von wenigstens 1, gemessen bei 160°C und 325 g Belastung, als obere Grenze charakterisiert ist.

2. Polymerdispersion nach Anspruch 1, dessen Monomer b) ausgewählt ist unter monoethylenisch ungesättigten Mono- oder Dicarbonsäuren und den Anhydriden davon; Amiden monoethylenisch ungesättigter Mono- oder Dicarbonsäuren; N-Mono- und N,N-Dialkylamiden monoethylenisch ungesättigter Mono- oder Dicarbonsäuren; monoethylenisch ungesättigten Alkoholen und Ethern; N-vinylheterocyclischen Verbindungen; Vinylestern von Monocarbonsäuren; Monoestern monoethylenisch ungesättigter Monocarbonsäuren; und Mono- und Diestern monoethylenisch ungesättigter Dicarbonsäuren.

3. Polymerdispersion nach Anspruch 1, deren dispergiertes Polymer als Monomere b)
b₁) wenigstens eine α,β-ungesättigte Mono- und/oder Dicarbonsäure oder ein Anhydrid davon, und
b₂) gegebenenfalls wenigstens ein mindestens eine Esterfunktion aufweisendes Monomer
enthält.

4. Polymerdispersion nach einem der vorhergehenden Ansprüche, worin wenigstens 40 Mol% der im Polymer enthaltenen Carboxylgruppen mit einem Amin, ausgewählt unter Mono-, Di- oder Trialkanolaminen mit 2 bis 6 C-Atomen im Hydroxyalkylrest, Monoalkyldialkanolaminen und Dialkylmonoalkanolaminen mit jeweils 2 bis 8 C-Atomen im Alkyl- und Hydroxyalkylrest, neutralisiert sind.

5. Polymerdispersion nach Anspruch 3 oder 4, deren dispergiertes Polymer als Monomer a) Ethylen, als Monomer b₁) Acrylsäure und/oder Methacrylsäure und als Monomer b₂) C₁-C₁₀-Alkylacrylat und/oder -Methacrylat enthält.

6. Polymerdispersion nach einem der vorhergehenden Ansprüche, **dadurch gekennzeichnet, daß** das Farbmittel ausgewählt ist unter anorganischen, organischen oder metallorganischen Pigmenten und Farbstoffen, die in der wässrigen Dispersionsphase im wesentlichen unlöslich sind.

7. Verwendung einer Polymerdispersion gemäß der Definition in einem der Ansprüche 1 bis 6 zum Schutz und/oder zur farbigen Gestaltung von Oberflächen.

8. Verfahren zum temporären Schutz von Oberflächen durch Auftragen einer Polymerdispersion gemäß der Definition in Anspruch 1 und anschließendes Trocknen der aufgetragenen Dispersionsschicht, wobei eine feste Polymerschicht auf der zu schützenden Oberfläche ausgebildet wird und die Polymerschicht im Mittel eine Trockenschichtdicke von mehr als 20 µm aufweist, welche hinterher auf rein mechanische Weise entfernt wird.

9. Verfahren nach Anspruch 8, **dadurch gekennzeichnet, daß** die Polymerschicht eine mittlere Trockenschichtdicke von etwa 25 bis 1000 µm aufweist.

10. Verfahren zur Herstellung einer Polymerdispersion gemäß einem der Ansprüche 1 bis 6, **dadurch gekennzeichnet, dass** man ein Polymer aus
a) wenigstens einem C₂-C₁₀-Olefin, und
b) wenigstens einem mit dem Olefin unter radikalischen Bedingungen copolymerisierbaren Comonomer,
das eine Schmelzviskosität von wenigstens 1000 m²/sec (bei 120°C) als untere Grenze und einen MFI-Wert von wenigstens 1, gemessen bei 160°C und 325 g Belastung, als obere Grenze aufweist,
mit wenigstens einem UV-Stabilisator und/oder wenigstens einem Farbmittel extrudiert und anschließend in der wässrigen Phase dispergiert.

## Claims

1. A polymer dispersion comprising in an aqueous dispersion phase a dispersed polymer of
a) at least one C₂-C₁₀ olefin and
b) at least one comonomer which is copolymerizable
with the olefin under free-radical conditions and
c) at least one UV stabilizer and/or at least one colorant present in solution or dispersion in the polymer phase,
the polymer being **characterized by** a melt viscosity of at least 1000 mm²/s (at 120°C) as the lower limit and an MFI of at least 1, measured at 160°C and 325 g load, as the upper limit.

2. A polymer dispersion as claimed in claim 1, whose monomer b) is selected from monoethylenically unsaturated mono- or dicarboxylic acids and the anhydrides thereof; amides of monoethylenically unsaturated mono- or dicarboxylic acids; N-mono- and N,N-dialkylamides of monoethylenically unsaturated mono- or dicarboxylic acids; monoethylenically unsaturated alcohols and ethers; N-vinyl heterocyclic compounds; vinyl esters of monocarboxylic acids; monoesters of monoethylenically unsaturated monocarboxylic acids; and mono- and diesters of monoethylenically unsaturated dicarboxylic acids.

3. A polymer dispersion as claimed in claim 1, whose dispersed polymer contains as monomers b)
b₁) at least one α,β-unsaturated mono- and/or dicarboxylic acid or anhydride thereof, and
b₂) if desired, at least one monomer containing at least one ester function.

4. A polymer dispersion as claimed in any of the preceding claims, wherein at least 40 mol% of the carboxyls present in the polymer have been neutralized with an amine selected from mono-, di- or trialkanolamines having 2 to 6 carbon atoms in the hydroxyalkyl radical, monoalkyldialkanolamines and dialkylmonoalkanolamines having in each case 2 to 8 carbon atoms in the alkyl and hydroxylalkyl radical.

5. A polymer dispersion as claimed in claim 3 or 4, whose dispersed polymer contains as monomer a) ethylene, as monomer b₁) acrylic acid and/or methacrylic acid, and as monomer b₂) C₁-C₁₀-alkyl acrylate and/or methacrylate.

6. A polymer dispersion as claimed in any of the preceding claims, wherein the colorant is selected from organic, inorganic and organometallic pigments and dyes which are substantially insoluble in the aqueous dispersion phase.

7. The use of a polymer dispersion as defined in any of claims 1 to 6 for the protection and/or color design of surfaces.

8. A method of temporarily protecting surfaces by applying a polymer dispersion as defined in claim 1 and then drying the applied dispersion coat to give a solid polymer coat on the surface to be protected, which coat has on average a dry thickness of more than 20 µm and is later removed by purely mechanical means.

9. A method as claimed in claim 8, wherein the polymer coat has an average dry thickness of from about 25 to 1000 µm.

10. A process for preparing a polymer dispersion as claimed in any of claims 1 to 6, which comprises extruding a polymer of
a) at least one C₂-C₁₀ olefin and
b) at least one comonomer which is copolymerizable with the olefin under free-radical conditions,
having a melt viscosity of at least 1000 mm²/s (at 120°C) as the lower limit and an MFI of at least 1, measured at 160°C and 325 g load, as the upper limit, with at least one UV stabilizer and/or at least one colorant and then dispersing the extrudate in the aqueous phase.

## Revendications

1. Dispersion de polymère qui contient, dans une dispersion en phase aqueuse, un polymère dispersé et constitué de
a) au moins une oléfine en C₂ à C₁₀ et
b) au moins un copolymère qui est polymérisable avec l'oléfine, dans des conditions radicalaires, et
c) au moins un stabilisant aux UV et/ou au moins un colorant qui est présent, en phase polymère, sous forme dispersée ou sous forme de solution,
le polymère présentant une viscosité à l'état fondu d'au moins 1 000 mm²/s (à une température de 120°C), en tant que limite inférieure, et une valeur MFI d'au moins 1, mesurée à une température de 160°C et sous une charge de 325 g, en tant que limite supérieure.

2. Dispersion de polymère selon la revendication 1, **caractérisée en ce que** l'on choisit le monomère b) dans le groupe formé par les acides dicarboxyliques et monocarboxyliques à insaturation monoéthylénique et leurs anhydrides; les amides dérivés des acides dicarboxyliques et monocarboxyliques à insaturation monoéthylénique; les N-monodialkylamides et les N,N-dialkylamides dérivés des acides dicarboxyliques et monocarboxyliques à insaturation monoéthylénique; les éthers et les alcools à insaturation monoéthylénique; les composés N-vinylhétérocycliques, les esters vinyliques dérivés des acides monocarboxyliques; les monoesters dérivés des acides monocarboxyliques à insaturation monoéthylénique; et les monoesters et les diesters dérivés des acides dicarboxyliques à insaturation monoéthylénique.

3. Dispersion de polymère selon la revendication 1, **caractérisé en ce que** le polymère dispersé contient, en tant que monomères b),
b₁) au moins un acide dicarboxylique et/ou monocarboxylique à insaturation en position α,β ou un de leurs anhydrides et
b₂) éventuellement au moins un monomère présentant au moins une fonction ester.

4. Dispersion de polymère selon l'une des revendications précédentes, dans laquelle les groupes carboxyliques contenus dans le polymère sont neutralisés, à raison d'au moins 40% en moles, avec une amine choisie dans le groupe formé par les monoalcanolamines, les dialcanolamines et les trialcanolamines présentant 2 à 6 atomes de C dans le reste hydroxyalkyle, les monoalkyl-dialcanolamines et les dialkyl-monoalcanolamines présentant chacun 2 à 8 atomes de C dans le reste alkyle et le reste hydroxyalkyle.

5. Dispersion de polymère selon la revendication 3 ou 4, **caractérisée en ce que** leur polymère dispersé contient, en tant que monomère a), l'éthylène, en tant que monomère b₁), l'acide acrylique et/ou l'acide méthacrylique et, en tant que monomère b₂), l'acrylate d'alkyle en C₁ à C₁₀ et/ou le méthacrylate d'alkyle en C₁ à C₁₀.

6. Dispersion de polymère selon l'une des revendications précédentes, **caractérisé en ce que** le colorant est choisi dans le groupe formé par les colorants et pigments inorganiques, organiques et organométalliques qui sont pour l'essentiel non solubles dans la dispersion en phase aqueuse.

7. Mise en oeuvre d'une dispersion de polymère selon la définition d'une des revendications 1 à 6, pour la protection et/ou pour la coloration des surfaces.

8. Procédé de protection temporaire de surfaces par application d'une dispersion de polymère selon la définition de la revendication 1, suivi d'un séchage de la couche de dispersion appliquée, procédé lors duquel on obtient une couche de polymère solide sur la surface destiné à la protection, laquelle couche présente une épaisseur moyenne de couche sèche supérieure à 20 µm, que l'on enlève ultérieurement par des moyens uniquement mécaniques.

9. Procédé selon la revendication 8, **caractérisé en ce que** la couche de polymère présente une épaisseur moyenne de couche sèche comprise dans la plage d'environ 25 µm à 1 000 µm.

10. Procédé de préparation d'une dispersion de polymère selon l'une quelconque des revendications 1 à 6, **caractérisé en ce que** l'on soumet à une extrusion un polymère constitué de
a) au moins une oléfine en C₂ à C₁₀ et
b) au moins un copolymère qui est polymérisable avec l'oléfine, dans des conditions radicalaires,
présentant une viscosité à l'état fondu d'au moins 1 000 mm²/s (à une température de 120°C), en tant que limite inférieure, et une valeur MFI d'au moins 1, mesurée à une température de 160°C et à une charge de 325 g, en tant que limite supérieure,
avec au moins un stabilisant aux UV et/ou au moins un colorant,
et **en ce que** l'on le disperse ensuite en phase aqueuse.
